# EUROPEAN PATENT APPLICATION

(11) **EP 4 311 168 A1**
(43) Date of publication of application: **24.01.2024**
(21) Application number: 23184352.5
(22) Date of filing: 10.07.2023
(51) Int. Cl.: H04L 9/40, H04L 45/745

(54) **NETWORK ANOMALIES DETECTION METHOD**

(30) Priority: 22.07.2022 FR 2207523
(71) Applicant: STMicroelectronics (Grand Ouest) SAS, 72100 Le Mans (FR)
(72) Inventor: ROSAY, Arnaud, 72210 VOIVRES LES LE MANS (FR); CARLIER, Florent, 72650 SAINT SATURNIN (FR); LEROUX, Pascal, 72650 ARNAGE (FR)
(74) Representative: Cabinet Beaumont

(57) **Abstract**

The present disclosure relates to a method comprising:
- the reception, via an interface (112) of an electronic device (100), of a first stream of packets sent by a source that is external and/or the transmission of a first stream of packets to a destination external;
- the computation, by a processing circuit (110), of a first packet stream identifier based on at least one of: a packet source address of the packets of the first stream; and a packet destination address of the first stream;
- searching, in an ordered dynamic data structure (114) stored in a memory (104, 106) and comprising a plurality of entries, wherein the searching is performed based on the value of the first packet stream identifier with respect to one or more search threshold values; and
- based on metadata associated with the first entry, blocking reception of the first stream of packets.

## Description

### Technical field

The present disclosure relates generally to the field of network communications, and in particular to the detection of network anomalies.

### Background art

In the field of the embedded systems with the Internet of Things (IoT), for example in the automotive field, connections with networks such as the internet become ubiquitous. These connections make embedded devices in such networks prone to becoming potential victims of hackers via network intrusion attacks. A defense mechanism against such attacks is to detect any anomalies present in communications to and from the network in order to detect potential attacks and to enable counter measures to be taken in order to assure the security and confidentiality of sensitive data of the embedded device.

Various techniques have been developed in order to detect any anomalies in data communications between a device and a network. As an example, Network Intrusion Detection Systems (IDS) have been proposed, and more particularly Flow-based IDS.

However, a drawback with existing techniques is that they tend to require relatively high processing power and/or can be slow in keeping track of all ongoing flows.

### Summary of Invention

There is a need in the art for the detection of network anomalies that overcome one or more problems in the prior art.

Embodiments of the present disclosure address all or some of the drawbacks of known method for detecting network anomalies.

One embodiment addresses all or some of the drawbacks of known method for detecting network anomalies.

One embodiment provides a method comprising:
- the reception, via an interface of an electronic device, of a first stream of packets sent by a source that is external to the electronic device and/or the transmission, via the interface, of a first stream of packets to a destination external to the electronic device;
- the computation, by a processing circuit of the electronic device, of a first packet stream identifier based on at least one of: a packet source address of the packets of the first stream; and a packet destination address of the packets of the first stream; and
- searching, in an ordered dynamic data structure stored in a memory of the electronical device and comprising a plurality of entries, each entry comprising packet stream metadata associated with a corresponding packet stream identifier, to identify a first entry associated with the first packet stream identifier, wherein the searching is performed based on the value of the first packet stream identifier with respect to one or more search threshold values; and
- based on the metadata associated with the first entry, blocking reception of the first stream of packets.

According to an embodiment, the ordered data structure is a dynamic data structure, the method further comprising:
- the reception, via the interface, of a second stream of packets sent by another source that is external to the electronic device and/or the transmission, via the interface, of a second stream of packets to another destination external to the electronic device;
- the computation, by the processing circuit, of a second packet stream identifier based on at least a packet source address and a packet destination address of the packets of the second stream; and
- searching, in the ordered dynamic data structure for a second entry associated with the second packet stream identifier, wherein if it is determined that the second packet stream identifier does not correspond to any of the entries:
- the extraction of metadata characterizing the second stream of packets; and
- the insertion, in the ordered dynamic data structure, of a new entry comprising the metadata characterizing the second stream of packets in association with the second packet stream identifier.

According to an embodiment, the packet stream metadata associated with each packet stream identifier comprises at least one of the following values:
- a destination port address of a stream of packets identified by the packet stream identifier;
- an internet protocol of a stream of packets identified by the packet stream identifier;
- a duration of a stream of packets identified by the packet stream identifier;
- a ratio between a number of downlink packets and a number of uplink packets in a stream of packets identified by the packet stream identifier;
- a ratio between a number of backward packets and a number of forward packets in a stream of packets identified by the packet stream identifier;
- a maximum length of packets in a stream of packets identified by the packet stream identifier;
- a mean length of forward and/or backward packets in a stream of packets identified by the packet stream identifier;
- a byte per second rate for a stream of packets identified by the packet stream identifier;
- a packet rate for a stream of packets identified by the packet stream identifier;
- a number of forward and/or backward packets in a stream of packets identified by the packet stream identifier;
- a total length of forward and/or backward packet in a stream of packets identified by the packet stream identifier; and
- a maximum length of a forward and/or backward packet in a stream of packets identified by the packet stream identifier.

According to an embodiment, the ordered dynamic data structure is a skip list.

According to an embodiment, the ordered dynamic structure is a balanced binary tree.

According to an embodiment, the ordered dynamic structure is a Red-Black Tree.

According to an embodiment, the first packet stream identifier is a concatenation, performed by the processing circuit in a shift register of the device, of at least the packet source address and/or the packet destination address of the packets of the first stream.

According to an embodiment, the first packet stream identifier is an integer value.

According to an embodiment, the first packet stream identifier is a floating-point value.

According to an embodiment, the first packet stream identifier is further based on the packet source port address and on the packet destination port address.

One embodiment provides an electronic device comprising:
- an interface configured to receive a first stream of packets, sent by a source that is external to the electronic device and/or to transmit a first stream of packets to a destination that is external to the electronic device;
- a processing circuit configured to compute a first packet stream identifier belonging to an ordered set, based on at least one of: a packet source address of the packets of the first stream; and a packet destination address of the packets of the first stream; and
- a memory configured to store an ordered dynamic data structure comprising a plurality of entries, each entry comprising packet stream metadata associated with a corresponding packet stream identifier,
the processing circuit being further configured to search, in the ordered dynamic data structure, to identify a first entry associated with the first packet stream identifier, wherein the searching is performed based on the value of the first packet stream identifier with respect to one or more search threshold values, and to block the reception of the first stream of packets based on the metadata.

According to an embodiment, the interface is further configured to receive a second stream of packets sent by another external source or to transmit a second stream of packets to another destination that is external to the electronic device, and wherein the processing circuit is further configured to:
- compute a second packet stream identifier based on at least a packet source address and a packet destination address of the packets of the second stream; and
- search in the ordered dynamic data structure for a second entry associated with the second packet stream identifier and, if it is determined that the second packet stream identifier does not correspond to any of the entries:
- extract metadata characterizing the second stream of packets; and
- insert, in the ordered dynamic data structure, a new entry comprising the metadata characterizing the second stream of packets in association with the second packet stream identifier.

According to an embodiment, the processing circuit is further configured to compute the first packet stream identifier by concatenating at least the packet source address and the packet destination address of the packets of the first stream.

### Brief description of drawings

The foregoing features and advantages, as well as others, will be described in detail in the following description of specific embodiments given by way of illustration and not limitation with reference to the accompanying drawings, in which:
Figure 1 schematically illustrates an example of an electronic device according to an embodiment of the present disclosure;
Figure 2 illustrates an example of an unordered data structure;
Figure 3 illustrates another example of an unordered data structure;
Figure 4 illustrates an example of an ordered data structure;
Figure 5 is a diagram illustrating the insertion time of elements for various data structures;
Figure 6 illustrates another example of an ordered data structure; and
Figure 7 is a flow diagram illustrating operations of a method for detecting network anomalies according to an embodiment of the present disclosure.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, various unordered and ordered data structure have not been described and are known by the person skilled in the art.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figure.

Unless specified otherwise, the expressions "around", "approximately", "substantially" and "in the order of" signify within 10 %, and preferably within 5 %.

In the following disclosure, the terms uplink and downlink respectively refer to uploading data from a terminal device to a network and downloading data from a network to a terminal device. The terms forward packets and backward packets respectively refer to data packets traversing a gateway of a network in opposite directions, the forward direction for example corresponding to the direction a first data packet of a given stream of packets.

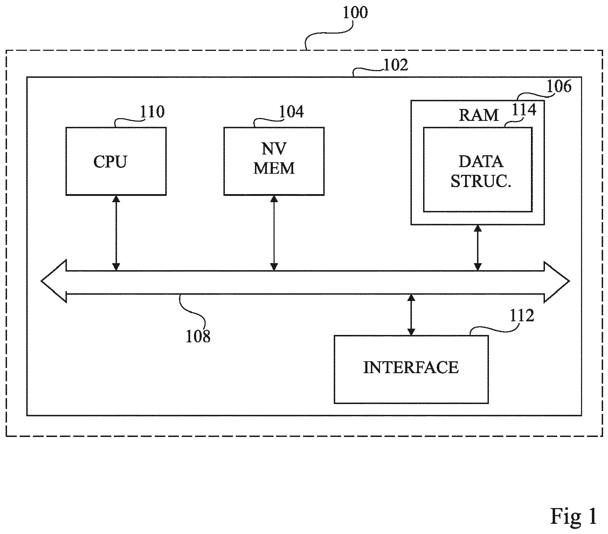

Figure 1 schematically illustrates an example of an electronic device 100 comprising an integrated circuit 102 according to an embodiment of the present disclosure. The electronic device 100 is for example a terminal device in a network, or a gateway device in a network, or may perform the role of a terminal device for certain streams of packets and of a gateway device for other streams of packets.

In some embodiments, the device 100 is an IoT device. Additionally or alternatively, the electronic device 100 for example forms part of an electronics system of an automobile.

The electronic device 100 further comprises a non-volatile memory 104 (NV MEM) and a volatile memory 106 (RAM). The non-volatile memory 104 is for example a FLASH memory. The volatile memory 106 is for example a random-access memory. The memories 104 and 106 are for example coupled to each other via a bus 108.

The electronic device 100 further comprises a processing circuit 110 (CPU) and a communications interface 112 (INTERFACE), for example coupled to the memories 104 and 106 via the bus 108. In some embodiments, the processing circuit 110 is a processor configured to execute instructions stored for example in the memory 106. According to another example, the processing circuit 110 is implemented by dedicated hardware, such as by a dedicated electronic subsystem or ASIC (Application Specific Integrated Circuit).

The communications interface 112 is for example configured to transmit and receive packet streams to/from devices external to the electronic device 100. In some embodiments, the communications interface 112 is a wireless interface configured to receive streams of data packets coming from external sources and sent via a network such as, for example, a Wi-Fi ("Wireless Fidelity") network. Additionally or alternatively, the communications interface 112 is a wireless interface configured to transmit streams of data packets to external destinations via a network such as, for example, a Wi-Fi network. For example, the electronic device 100 is connected to the Internet of Things via the interface 112. In another embodiment, the interface 112 is a wired interface configured to receive streams of data packets coming from external sources and sent via a wired network such as, for example, an Ethernet network.

The processing device 110 is for example configured to implement a flow-based IDS method in order to protect the device 100 from intruder attacks. Flow-based IDS involves analyzing an ongoing packet flow in order to extract metadata over time, which is then compared with one or more thresholds in order to detect anomalies indicative of an attack. For example, metadata comprises a number n of pieces of information. The number n of pieces of information is, for example, equal to 41 in a KDD-CUP99 IDS dataset, 49 in a UNSW-NB IDS dataset or 84 in a CICIDS2017 IDS dataset. More generally, the number of pieces of information can vary and depends on a considered IDS dataset. For example, the metadata is based on the number of packets of a given packet flow received in a given time period and/or on the total packet size associated with a given packet flow received in a given time period. Each packet flow for example corresponds to the packets transmitted from a given source address to a given destination address. The metadata is for example collected during the packet flow and stored in a data structure 114 (DATA STRUC.), which is for example stored in the volatile memory 106. If the flow already exists in the data structure 114, the associated metadata is updated in the data structure 114. If the flow does not exist in the data structure 114, metadata is calculated for this new flow, and inserted in the data structure 114.

The effectiveness of a flow-based IDS depends on the searching time complexity of the data structure 114. Indeed, new and/or updated metadata concerning a given flow should be stored to the relevant entry in the data structure 114 in real time so that no information is missed and a timely alert can be generated in case of the detection of an anomaly. In particular, the data structure is capable of being used to log ongoing and new packet streams in order to permit the collection and storage of the metadata, and the generation of alerts in case anomalies are detected.

The data structure 114 is for example a dynamic data structure, meaning that new entries can be added to the data structure in such a manner that the new entries, as well as all of the existing entries, can be located by searching the data structure. Advantageously, the data structure 114 is an ordered dynamic data structure.

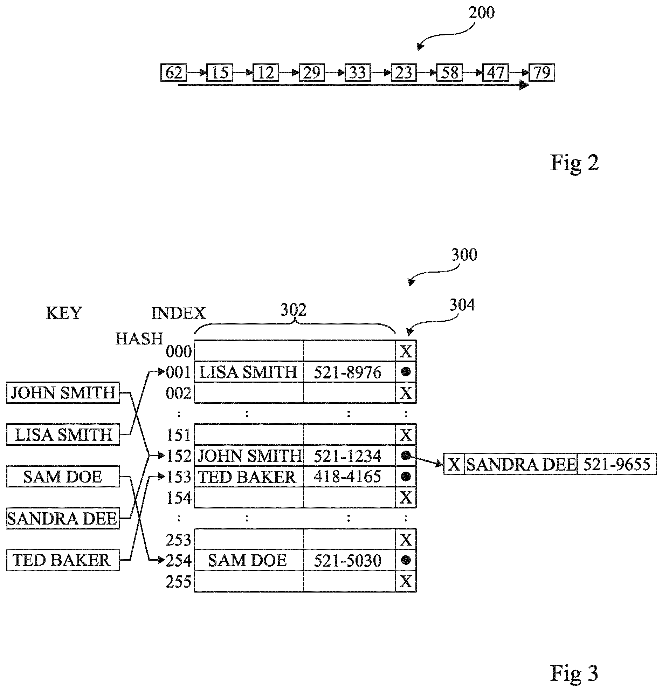

Some examples of unordered and ordered data structures will now be described with reference to Figures 2 to 6.

Figure 2 illustrates an example of an unordered data structure 200, and in particular a linked-list structure.

For example, the linked-list 200 comprises 9 elements, which are represented as integers. For example, the first to ninth elements of the list are respectively the integers 62, 15, 12, 29, 33, 23, 58, 47 and 79. Each time that a new element is inserted in the linked-list 200, it becomes, for example, the new first or the new last element of the list. Thus, a linked-list has an unordered structure, as the integers of the linked-list 200 are arranged by order of insertion in the list, and not in an increasing or decreasing order.

When searching for a target element in the linked-list 200, the elements of the list are parsed, one by one, starting from the first element, until the target element is found. The search time in a linked-list 200 is thus proportional to the number of elements it contains. In other word, for a linked-list comprising a number ***n*** of elements, the searching time complexity is an ***0*(*n*)**. The searching time complexity is a well know concept in the field, and provides an indication of the search time in a given data structure.

Figure 3 illustrates an example of another unordered data structure 300, and in particular a HashMap structure, which is presented according to an example in which it is used to store phone book data.

The HashMap 300 allows an element, for example couple of values 302 comprising a name and a phone number, to be associated with a key (KEY). In the example of the HashMap 300, the couple of values (LISA SMITH, 521-8976) is associated with the key LISA SMITH.

All elements of the HashMap 300 are stored consecutively and are accessible by an index (INDEX) corresponding, for example, to a hash value. For example, the index associated to the couple (LISA SMITH, 521-8976) is generated by applying a hash function (HASH) to the key LISA SMITH. For example, the index value corresponds to the hash value generated, modulo the size of the HashMap 300. For example, the index value associated to the couple (LISA SMITH, 521-8976) is the value 001. For example, the HashMap 300 further comprises a couple (SAM DOE, 521-5030) having, for index, the value 254, and a couple (TED BAKER, 418-4165) having, for index, the value 153.

Hence, when searching for a target element, the corresponding index is computed from a corresponding key, for example the name. The target element is then accessible with the index value.

To insert a given new element in the HashMap 300, for example the name SANDRA DEE with the phone number 521-9655, the corresponding index, for example 152, is generated and the element is inserted in the data structure 300. In the example of the HashMap 300, another element, which is the couple (JOHN SMITH, 521-1234), is already identified by the index value 152. Therefore, there is a collision, and in such a case, the elements having the same index are for example arranged in a linked-list. In the example illustrated by figure 3, an entry 304 indicates if there is at least one collision. For example, a cross (x) indicates that there is no collision and a dot (•) indicates the presence of at least one collision for the corresponding index. Collisions only occur when the HashMap 300 is almost full, that is to say when the number of data elements stored is close to a threshold size value. For example, the threshold size value is equal to a percentage of the HashMap 300 size, the percentage for example being equal to 75%.

When the HashMap 300 reaches a threshold size, its size is for example doubled and all the indexes are recomputed. This allows the HashMap 300 to be rearranged, and makes some of the collisions disappear. For example, by doubling the size of the HashMap 300, the hash value of the key SANDRA DEE, modulo the new size of the HashMap, will be no longer equal to 152.

For a HashMap comprising no collision, all elements are accessible with a constant time delay. Due to some delay occurring from time to time, such as for example in case of a collision or a size increase of the HashMap 300, the searching time complexity is an ***0*(1)** in amortized time.

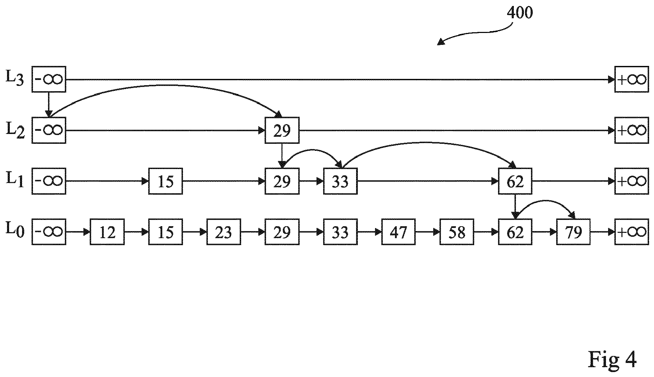

Figure 4 illustrates an example of an ordered data structure 400, and in particular a skip list structure comprising nine integer elements.

The skip list 400 is a probabilistic data structure sharing some properties with a linked-list, while limiting its drawback.

The skip list 400 for example comprises four layers. A bottom layer ***L*₀** is a linked list comprising the nine elements, a ground value (-∞) and a head value (+∞), these elements and values being are arranged in an increasing fashion. The ground value is smaller than any of the elements of the skip list 400 and the head value is higher than any of the elements of the skip list 400. When building the skip list 400, each integer element of the layer ***L*₀** has a probability **1/*p***, with ***p*** ≥ **1**, of being added to a second layer ***L*₁**. In other words, for each element, a random decision is made as to whether or not it is added to the second layer *L*₁. In the example of the skip list 400, ***p*** is for example equal to 2 and thus statistically 1 in 2 of the elements are added to the second layer ***L*₁**, which in the example of Figure 4 corresponds to the elements 15, 29, 33 and 62. Similarly, when building the skip list 400, each element of the layer ***L*₁** has a probability **1/*p*** of being added to the layer above, which is the layer ***L*₂**. The probability of setting an element on a ***n^{th}*** layer ***Lₙ, n*** being an integer, is equal to **1/(*p*^{(*n*+1)})**, which reduces the probability that the number of layers will increase considerably. In the example of the skip list 400, only the element 29 is added to the layer ***L*₂**. Moreover, the layers ***L*₁** and ***L*₂** are also ordered lists and contain the ground and the head elements. The element 29 is for example not reported to a third layer and a top layer ***L*₃** only contains the ground and the head elements. In general, a skip list of ***n*** elements comprises a number ***logₚ*(*n*)** of layers and a top layer.

Searching for a target element begins in the top layer. The elements are parsed horizontally, from the smallest, until an element is found that is greater than or equal in value to the target element. When the parsed element is equal to the target element, then the target element has been found. When the spared element is greater than the target element, the process is repeated after returning to the previous element, that is to say the closest smaller element to the target element of the layer, and dropping to the next lower layer. In the example of Figure 4, the target element is for example the integer 79 and the parsing of the top layer ***L*₃** automatically leads to the parsing of the ground element of the layer ***L*₂**. The ground element being by definition smaller than the target element, the next element of the layer ***L*₂** is parsed, the element 29 is smaller than the target element, but the following element is the head element. Thus, the parsing continues from element 29 in the layer ***L*₁**. In the layer ***L*₁**, the element 29 is followed by the elements 33 and 62, each smaller than the target element. The head element follows the element 62. Thus, the searching continues from element 62 in layer ***L*₀**. Among layer ***L*₀** elements, the target element follows the element 62, and it is then found.

The method of inserting of a new integer element is similar to the search method. The skip list is parsed from the top layer to the bottom layer in order to identify the location in which to insert, in an ordered fashion, the new element in the bottom layer. The new element is then added to the layer above with probability 1/p, and if it is added to the layer above, is then added to the layer above with probability 1/p, etc.

For a skip list, the searching time complexity, and the insertion time complexity, are an ***0*(*log*(*n*))**. Similarly to the search time complexity, the insertion time complexity is a well know concept in the field, and provides an indication of the insertion time of a new entry in a given data structure.

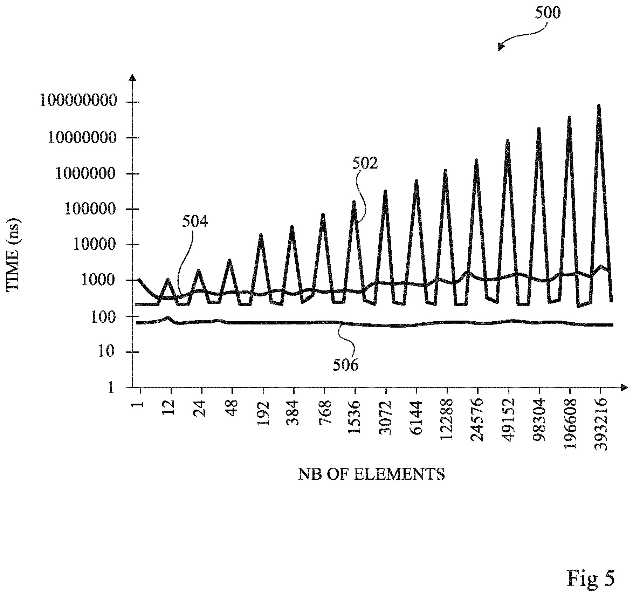

Figure 5 is a diagram 500 illustrating the insertion time of elements for various data structures. In particular, the diagram 500 illustrates three graphs 502, 504 and 506 respectively illustrating the insertion time (TIME(ns)) in nanoseconds as a function of the size (NB OF ELEMENTS) of the HashMap 300, the skip list 400 and the linked list 200.

The insertion of elements in the HashMap 300 for example cause the doubling of the size of the HashMap only when the insertion causes the HashMap 300 to reach a size threshold. For example, the HashMap initially has a size allowing the storage of 12 elements. The insertion of the thirteenth element for example causes the doubling of the size of the HashMap 300. The doubling causes a peak in the graph 502. The following insertions, until the twenty-fourth, are not costly in time because the HashMap already has the slots for theses insertions. As for the thirteenth, the twenty-fifth insertion causes a peak in the graph 502. Indeed, each insertion causing the doubling of the size of the HashMap 300 causes such a peak. The insertion time required at each doubling of the size of the HashMap 300 becomes higher and higher. For example, the insertion time required for the insertion of the thirteenth element is around **10³** nanoseconds, while the insertion time required for the insertion of the 393,217^{th} element is around **10⁸** nanoseconds. When a HashMap is used to implement the data structure 114 of Figure 1, this exponentially increasing time may cause the processing circuit 110 to be overloaded when a relatively large number of streams of packets is received.

The insertion time required for the skip list 400 is slowly increasing as a function of the size of the skip list 400. For example, the maximum insertion time required to insert an element, when the size is smaller than 393,216, is around 3,000 nanoseconds, which is a considerably shorter time than for the HashMap 300.

The insertion time of elements in the linked list 200 is relatively constant and a little less than 100 nanoseconds. The low insertion time required is due to the weak complexity of inserting an element in the linked list 200. Indeed, elements are always inserted, for example, at the beginning or at the end of the linked list, while for the skip list 400, the element is ordered between the existing elements. Nevertheless, the searching time complexity of the linked list 200 largely offsets the gain of time provided by the relatively short insertions.

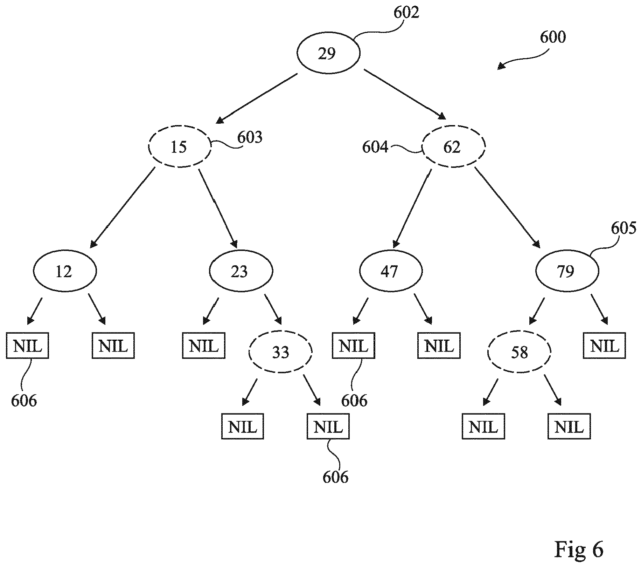

Figure 6 illustrates an example of an ordered data structure 600, and in particular of a balanced Black-Red Tree structure.

The balanced Black-Red Tree 600 is a kind of balanced binary tree. The tree 600 for example comprises a root 602 to which is associated a data value, equal to 29 in the example of figure 6. The tree 600 further comprises nodes, including a node 603, a node 604 and a node 605 respectively associated with data values 15, 62 and 79. The tree 600 for example comprises a plurality of other nodes, not referenced in Figure 6. The tree 600 further comprises leaves 606, each leaf 606 being a terminal node of the tree 600. The leaves 606 are not associated with any data value, and are represented with a null element NIL. The root and each node are parents of two children, a child being either another node or a leaf. For a given node, a right child (child positioned to the right of the node in the layer below) has higher value than that of the node, or is a leaf, and a left child (child positioned to the left of the node in the layer below) has a smaller value than that of the node, or is a leaf.

As for a balanced binary tree, the searching of a target element, for example 79, in the tree 600 involves browsing the tree, from the root, until the target element is found. For example, the element 29 of the root of the tree 600 is smaller than the target element, and the searching thus continues by parsing the right child of the root, which is the node 604 with value 62. The value 62 is smaller than the target element, and the searching thus continues by parsing the right child of the node 604, which is the node 605. The node 605 is associated with the target element, and thus the searching is complete. The searching time complexity of a balanced binary tree, including a balanced binary Black-Red tree, comprising a number ***n*** of element is an ***0*(*log*(*n*)).**

In contrast to standard balanced binary trees, each node of the black-red tree 600 is further associated with an additional attribute. For example, the additional attribute is a single bit of information, that can conceptually be represented as a color, red or black. The root and the leaves of a balanced Black-Red tree are always black. Moreover, the children, that are not a leaf, of a black node are red nodes and the children, that are not a leaf, of a red node are black. An important property of a balanced black-red tree is that each path from a given node to any of its descendant leaves goes through the same number of black nodes. This rule yields the advantage that the insertion time in a balanced black-red binary tree is better than the insertion time in a standard balanced binary tree. Indeed, the insertion time for a standard balanced binary tree comprising n elements is between an ***0*(*log*(*n*))** and an ***0*(*n*)***,* depending on the tree, and is an ***0*(*log*(*n*))** for a balanced black-red tree.

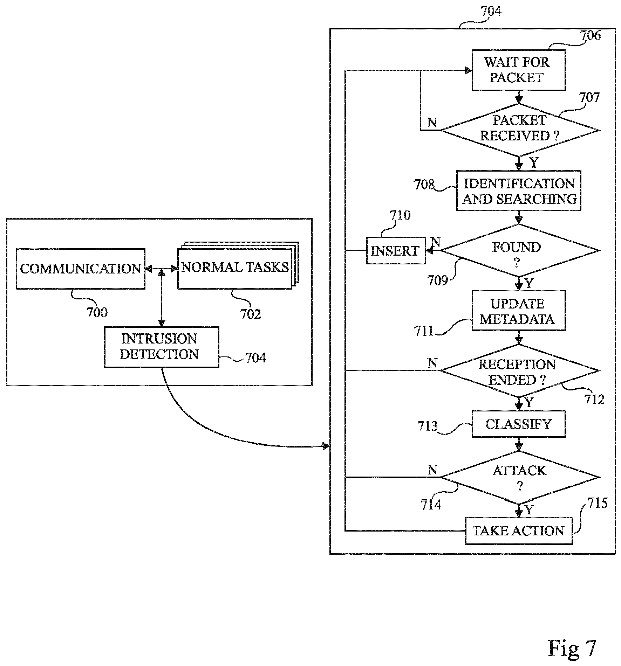

Figure 7 is a flow diagram illustrating operations of a method for detecting network anomalies occurring in the device 100 of figure 1 according to an embodiment of the present disclosure.

In an operation 700 (COMMUNICATION), a communication is for example established between the device 100 and an external source. This communication is for example established via a data communication network, such as the internet, and/or other local networks. During the operation 700, the device 100 for example receives and/or transmits one or more ongoing stream of packets.

The operation 700 is for example followed by an operation 702 (NORMAL TASKS), in which the device 100 for example performs tasks based on the received packets.

To ensure that the packets of an ongoing stream of packets are not the result of a network anomaly, such as, for example, an intrusion, an operation 704 (INTRUSION DETECTION) is for example implemented in parallel with the operation 702.

The operation 704 is for example implemented by the processing circuit 110, and involves a plurality of operations 706 to 715.

For example, in the operation 706 (WAIT FOR PACKET), the processing circuit 110 monitors the interface 112, waiting for the reception of a new stream of packets, or waiting for the reception of a new packet belonging to an ongoing stream of packets. A received packet may originate from an external source or may be a packet that is to be transmitted to an external destination. The processing circuit 110 is for example configured to determine whether or not a packet from a stream of packets is received by the interface in an operation 707 (PACKET RECEIVED?). If the processing circuit 110 does not detect any packet (branch N), the process continues by repeating the operation 706 after a given time delay, and this is repeated until a packet is received.

If, in the operation 707, the processing circuit 110 detects the reception of a packet (branch Y), the process continues in an operation 708 (IDENTIFICATION AND SEARCHING).

According to an embodiment, the operation 708 involves generating an identifier for the ongoing flow of packets, based on the received packet. This identifier is for example based on a combination of fields identifying uniquely the ongoing flow. The fields for example comprise the packet source address and/or the packet destination address. The fields may further comprise the packet source port address and the packet destination port address. The fields may further comprise an indication of the protocol, such as for example TCP ("Transmission Control Protocol"), or of the service, such as for example FTP ("File Transfer Protocol"), used for the communication, which are categorical data and difficult to convert to integer data. For example, the communications interface 112 comprises a plurality of ports transmitting packet streams, and a plurality of ports for receiving packet streams. The source and destination port addresses for example form fields of the header of each packet of the stream, and either or both of these fields is thus for example used to calculate the identifier of the ongoing packet stream.

According to an embodiment, the identifier is generated so as to belong to an ordered data structure, such as for example the set of the real or the natural numbers.

According to an embodiment, the identifier is generated based on a concatenation of the values of the fields on which it is based. For example, the processing circuit 110 comprises a shift register configured to receive a plurality of fields of the received packet in a serial manner, and to output the bits of the fields in parallel to form the identifier.

According to another embodiment, the identifier is generated by the processing circuit 110, which is further configured to apply a mathematical function to the values of the fields. The mathematical function could for example be any combination of additions, subtractions, multiplications, and/or other mathematical operations._In another example, the mathematical function is applied as a preprocessing of the values of the fields before the generation, based on a concatenation, of the identifier.

According to an embodiment, for a bi-directional packet stream, two distinct identifiers are computed based on the fields that allow the incoming and outgoing packets to be identified as separate streams. For example, in this case, the packet destination address is not used to compute the identifier of the unidirectional packets.

According to an embodiment, the ordered data structure is a skip list or a balanced binary tree, such as for example a red-black tree, B- trees, B+ trees etc., stored in the volatile memory 106.

The ordered data structure is for example empty at each boot of the processing circuit 110. Furthermore, the ordered data structure is for example configured to store metadata, originating from the packets of a stream of packets received by the interface 112, in association with an entry. The entry is for example identified by the identifier generated from fields of the packets of the stream of packets.

The processing circuit 110 is for example further configured to search for the identifier in the ordered data structure and to determine, in an operation 709 (FOUND?), if the identifier corresponds to an existing entry of the ordered data structure. The searching for example comprises comparing the identifier with one or more search threshold values, which correspond for example to the elements of the skip list of figure 4 or the nodes of the binary tree of figure 6. If the identifier does not correspond to any of the existing entries, or if the ordered data structure is empty (branch N), the process continues in an operation 710 (INSERTION), in which a new entry is inserted in the data structure, and the metadata forms the entry in the ordered data structure in association with the identifier. The entry inserted in operation 710 for example contains metadata characterizing the received packet stream. The number of metadata elements for a new stream of packets is for example the same as the number of metadata elements of an ongoing stream. In another example, some statistical values require more samples to be computed, in which case the number of metadata elements of a new stream of packets differs from the number of metadata elements of an ongoing stream.

The insertion time of a new entry in association of the identifier depends on the kind of the ordered data structure. Once the operation 710 is complete, the process continues by returning to operation 706 and waiting for the reception of another packet.

If, during the operation 709, the processing circuit 110 finds an entry of the ordered data structure (branch Y) corresponding to the identifier, then the process continues in an operation 711 (UPDATE METADATA). In operation 711, the processing circuit 110 for example extracts information forming the metadata that characterizes the packet of the ongoing stream. The processing circuit 110 also for example uses the extracted information to update metadata of the ongoing stream. For example, the metadata of the ongoing stream comprises one or more of the following values:
- a destination port address of a stream of packets identified by the packet stream identifier;
- an internet protocol of a stream of packets identified by the packet stream identifier;
- a duration of a stream of packets identified by the packet stream identifier;
- a ratio between a number of downlink packets and a number of uplink packets in a stream of packets identified by the packet stream identifier;
- a ratio between a number of backward packets and a number of forward packets in a stream of packets identified by the packet stream identifier;
- a maximum length of packets in a stream of packets identified by the packet stream identifier;
- a mean length of forward and/or backward packets in a stream of packets identified by the packet stream identifier;
- a byte per second rate for a stream of packets identified by the packet stream identifier;
- a packet rate for a stream of packets identified by the packet stream identifier;
- a number of forward and/or backward packets in a stream of packets identified by the packet stream identifier;
- a total length of forward and/or backward packet in a stream of packets identified by the packet stream identifier;
- a maximum length of a forward and/or backward packet in a stream of packets identified by the packet stream identifier; and
- a ratio between a number of forward packets and a number of backward packets in a stream of packets identified by the packet stream identifier, for example in the case that the packets traverse a gateway. These examples of the possible information values forming metadata are not limitative and many other information values could be considered.

The metadata of the ongoing stream for example further comprises:
- a minimum and/or maximum inter arrival time between packets in a stream of packets identified by the packet stream identifier;
- a mean value and/or a standard deviation value of inter arrival time between packets in a stream of packets identified by the packet stream identifier;
- a flag value of packets from a stream of packets identified by the packet stream identifier, the flag for example being an URG (URGENT) flag, a PSH (PUSH) flag, etc.

Moreover, the metadata is for example extracted from the forward direction, or from the backward direction, or from both directions, of an ongoing stream of packets identified by the packet stream identifier.

The processing circuit 110 is for example configured to update the metadata stored in the ordered data structure in association with the identifier at each reception of a packet associated with that identifier. The updating of the metadata for example comprises updating the statistics based on appropriate algorithms in order to take into account the characteristics of each new packet.

In an operation 712 (RECEPTION ENDED?), the processor 110 for example determines whether the reception of the ongoing stream of packets identified in the operation 709 is finished. For example, the final packet of the stream contains in its header an indication that it is the last packet of the ongoing flow.

In another example, the circuit 102 further comprises a timer configured to send a signal to the processing circuit 110 when a threshold time value has been reached since the beginning of the operation 706. The processing circuit 110 is for example configured to determine that the reception of the ongoing stream is finished at the reception of this signal.

If it is determined in operation 712 that reception of the stream of packets has not yet ended (branch N) the process for example continues by repeating operation 706, involving waiting for another packet from the ongoing stream of packets.

If, in operation 712, it is determined that the ongoing stream of packets has ended (branch Y), then the process continues in an operation 713 (CLASSIFY).

During the operation 713, the processing circuit 110 is for example configured to compare the metadata stored in the ordered data structure associated with the identifier with one or more thresholds, which for example permit to classify the stream as normal, or anomalous. For example, the one or more thresholds may correspond to: an upper limit on the mean packet size of the packets in the packet stream; and/or an upper and/or lower limit on the standard deviation of the packet size of the packets in the packet stream; and/or an upper limit of the number of packets in the stream of packets.

In an operation 714 (ATTACK?), the processing circuit 110 is for example further configured to determine, based on the classification performed in operation 713, whether the ongoing stream comes from a network anomaly, such as a network intrusion attack. If the processing circuit 110 determine that there is no network anomaly (branch N), the process continues by repeating the operation 706, involving waiting for a new stream of packets.

If the processing circuit determines, in the operation 714, that there is potentially a network anomaly (branch Y), the process continues in an operation 715 (TAKE ACTION) in which at least one countermeasure is taken. For example, the ongoing stream of packets is blocked, meaning that the packets of the stream are discarded without being processed in the operation 702. The method then for example returns to operation 706, involving waiting for a new stream of packets.

An advantage of the embodiments of the present disclosure is that, by generating an identifier of each packet stream based on fields of any packet of the stream, and using this identifier in order to locate a corresponding entry in an ordered list, the metadata associated with the ongoing stream of packets can be accessed in a timely manner, allowing network anomalies, such as network intrusion attacks, to be identified quickly. Furthermore, by using a skip list as the ordered data structure, the insertion time can be consistently low, permitting a relatively large number of new packet streams to be inserted.

Various embodiments and variants have been described. Those skilled in the art will understand that certain features of these embodiments can be combined and other variants will readily occur to those skilled in the art. In particular, while specific examples have been described of the fields that can be used to generate the packet stream identifiers, it will be apparent to those skilled in the art that alternative fields of the packets could be used that permit a given stream to be uniquely identified by value falling within an ordered set. Furthermore, while some examples of ordered data structures having specific advantages have been described, it will be apparent to those skilled in the art that the use of other types of ordered data structures would be possible.

Finally, the practical implementation of the embodiments and variants described herein is within the capabilities of those skilled in the art based on the functional description provided hereinabove.

## Claims

1. A method comprising:
- the reception, via an interface (112) of an electronic device (100), of a first stream of packets sent by a source that is external to the electronic device and/or the transmission, via the interface, of a first stream of packets to a destination external to the electronic device;
- the computation, by a processing circuit (110) of the electronic device, of a first packet stream identifier based on at least one of: a packet source address of the packets of the first stream; and a packet destination address of the packets of the first stream;
- the searching, in an ordered dynamic data structure (114) stored in a memory (104, 106) of the electronical device and comprising a plurality of entries, each entry comprising packet stream metadata associated with a corresponding packet stream identifier, to identify a first entry associated with the first packet stream identifier, wherein the searching is performed based on the value of the first packet stream identifier with respect to one or more search threshold values; and
- based on the metadata associated with the first entry, blocking reception of the first stream of packets.

2. The method according to claim 1, wherein the ordered data structure (114) is a dynamic data structure, the method further comprising:
- the reception, via the interface (112), of a second stream of packets sent by another source that is external to the electronic device and/or the transmission, via the interface, of a second stream of packets to another destination external to the electronic device;
- the computation, by the processing circuit (110), of a second packet stream identifier based on at least a packet source address and a packet destination address of the packets of the second stream; and
- searching, in the ordered dynamic data structure for a second entry associated with the second packet stream identifier, wherein if it is determined that the second packet stream identifier does not correspond to any of the entries:
- the extraction of metadata characterizing the second stream of packets; and
- the insertion, in the ordered dynamic data structure, of a new entry comprising the metadata characterizing the second stream of packets in association with the second packet stream identifier.

3. The method according to claim 1 or 2, wherein the packet stream metadata associated with each packet stream identifier comprises at least one of the following values:
- a destination port address of a stream of packets identified by the packet stream identifier;
- an internet protocol of a stream of packets identified by the packet stream identifier;
- a duration of a stream of packets identified by the packet stream identifier;
- a ratio between a number of downlink packets and a number of uplink packets in a stream of packets identified by the packet stream identifier;
- a ratio between a number of backward packets and a number of forward packets in a stream of packets identified by the packet stream identifier
- a maximum length of packets in a stream of packets identified by the packet stream identifier;
- a mean length of forward and/or backward packets in a stream of packets identified by the packet stream identifier;
- a byte per second rate for a stream of packets identified by the packet stream identifier;
- a packet rate for a stream of packets identified by the packet stream identifier;
- a number of forward and/or backward packets in a stream of packets identified by the packet stream identifier;
- a total length of forward and/or backward packet in a stream of packets identified by the packet stream identifier; and
- a maximum length of a forward and/or backward packet in a stream of packets identified by the packet stream identifier.

4. The method according to any of claims 1 to 3, wherein the ordered dynamic data structure (114) is a skip list.

5. The method according to any of claims 1 to 3, wherein the ordered dynamic structure (114) is a balanced binary tree.

6. The method according to claim 5, wherein the ordered dynamic structure (114) is a Red-Black Tree.

7. The method according to any of claims 1 to 6, wherein the first packet stream identifier is a concatenation, performed by the processing circuit in a shift register of the device (100), of at least the packet source address and/or the packet destination address of the packets of the first stream.

8. The method according to any of claims 1 to 7, wherein the first packet stream identifier is an integer value.

9. The method according to any of claims 1 to 7, wherein the first packet stream identifier is a floating-point value.

10. The method according to any of claims 1 to 9, wherein the first packet stream identifier is further based on the packet source port address and on the packet destination port address.

11. An electronic device (100) comprising:
- an interface (112) configured to receive a first stream of packets, sent by a source that is external to the electronic device and/or to transmit a first stream of packets to a destination that is external to the electronic device;
- a processing circuit (110) configured to compute a first packet stream identifier belonging to an ordered set, based on at least one of: a packet source address of the packets of the first stream; and a packet destination address of the packets of the first stream; and
- a memory (104, 106) configured to store an ordered dynamic data structure (114) comprising a plurality of entries, each entry comprising packet stream metadata associated with a corresponding packet stream identifier,
the processing circuit being further configured to search, in the ordered dynamic data structure, to identify a first entry associated with the first packet stream identifier, wherein the searching is performed based on the value of the first packet stream identifier with respect to one or more search threshold values, and to block the reception of the first stream of packets based on the metadata.

12. The electronic device (100) according to claim 11, wherein the interface (112) is further configured to receive a second stream of packets sent by another external source or to transmit a second stream of packets to another destination that is external to the electronic device, and wherein the processing circuit is further configured to:
- compute a second packet stream identifier based on at least a packet source address and a packet destination address of the packets of the second stream; and
- search in the ordered dynamic data structure (114) for a second entry associated with the second packet stream identifier and, if it is determined that the second packet stream identifier does not correspond to any of the entries:
- extract metadata characterizing the second stream of packets; and
- insert, in the ordered dynamic data structure, a new entry comprising the metadata characterizing the second stream of packets in association with the second packet stream identifier.

13. The electronic device according to claim 11 or 12, wherein the processing circuit (110) is further configured to compute the first packet stream identifier by concatenating at least the packet source address and the packet destination address of the packets of the first stream.
